# DEMANDE DE BREVET EUROPEEN

(11) **EP 1 308 348 A2**
(43) Date de publication de la demande: **07.05.2003**
(21) Numéro de dépôt: 02292697.6
(22) Date de dépôt: 30.10.2002
(51) Int. Cl.: B60R 11/02

(54) **Agencement pour un élément d'affichage d'informations de véhicule automobile**

(30) Priorité: 31.10.2001 FR 0114111
(71) Demandeur: Renault s.a.s., 92100 Boulogne Billancourt (FR)
(72) Inventeur: Aubier, Olivier, 78310 Maurepas (FR); Jouenard, Eric, 75013 Paris (FR); Langlois, Sébastien, 78280 Guyancourt (FR); Larvor, Philippe, 93110 Rosny sous Bois (FR)

(57) **Abrégé**

L'invention propose un agencement (10) pour un élément (12) d'affichage d'informations qui est destiné à un véhicule automobile et qui est monté mobile dans une planche (14) de bord entre une première position où il est escamoté dans un logement (18) de la planche (14) de bord et une seconde position dans laquelle il fait face à une ouverture (20), caractérisé en ce qu'il comporte un couvercle (24), monté à rotation au-dessus de l'ouverture (20) du logement (18), qui peut accompagner le mouvement de l'élément (12) d'affichage pour, dans la première position de l'élément (12) d'affichage, obturer l'ouverture (20) du logement (18) en affleurant à la surface (22) de la planche (14) de bord, et pour, dans la seconde position, faire saillie sensiblement horizontalement à partir de la surface (22) de la planche (14) de bord pour former une visière pour l'élément (12) d'affichage.

## Description

L'invention concerne un agencement pour un élément d'affichage d'informations destiné à un véhicule automobile.

L'invention concerne plus particulièrement un agencement pour un élément d'affichage d'informations destiné à un véhicule automobile, du type dans lequel l'élément d'affichage est monté mobile dans une planche de bord du véhicule d'orientation sensiblement transversale, entre une première position dans laquelle il est escamoté dans un logement de la planche de bord dont une ouverture débouche à la surface de la planche de bord et une seconde position dans laquelle il fait face à ladite ouverture.

On connaît de nombreux exemples d'agencements de ce type.

Le document EP-B-0.338.405 décrit et représente un agencement dans lequel une unité d'affichage est montée dans un boîtier qui peut être monté dans un logement d'une planche de bord de véhicule automobile. L'unité est mobile entre une position de rangement dans laquelle elle forme tiroir dans le boîtier, et une position d'utilisation dans laquelle, une fois actionnée en coulissement, elle peut être rabattue selon un mouvement de rotation sur une face avant du boîtier.

Le document DE-A-3.840.763 décrit et représente un agencement pour un autoradio de véhicule automobile. L'autoradio est agencé dans un logement du tableau de bord du véhicule qui peut être occulté par un volet pivotant escamotable formant écran. L'autoradio est monté coulissant dans le logement de manière à pouvoir être accessible quand le volet pivotant formant écran est escamoté.

Un inconvénient connu de tels agencements est que l'élément d'affichage d'informations escamotable affleure sensiblement à la surface du tableau de bord lorsqu'il est en position d'utilisation et reçoit de ce fait de manière directe l'éclairage ambiant qui règne dans l'habitacle du véhicule. De ce fait, il est susceptible de recevoir nombre de reflets. Dans le cas où l'élément d'affichage est un écran, cet état de fait nuit considérablement à sa lisibilité.

Pour remédier à cet inconvénient, l'invention propose un agencement comportant des moyens pour former une visière pour l'élément d'affichage.

Dans ce but, l'invention propose un agencement du type décrit précédemment, caractérisé en ce qu'il comporte un couvercle qui est monté à rotation autour d'un axe transversal au-dessus de l'ouverture du logement et qui est destiné à accompagner le mouvement de l'élément d'affichage pour :
- dans la première position de l'élément d'affichage, obturer l'ouverture du logement en affleurant à la surface de la planche de bord,
- dans la seconde position, faire saillie sensiblement horizontalement à partir de la surface de la planche de bord pour former une visière pour l'élément d'affichage.

Avantageusement, l'agencement proposé par l'invention est particulièrement compact du fait de la cinématique du couvercle et de l'élément d'affichage.

Selon d'autres caractéristiques de l'invention :
- l'élément d'affichage est monté à rotation dans le logement ;
- l'élément d'affichage est mobile selon une cinématique qui lui est propre de manière à affleure sensiblement à la surface de la planche de bord dans la seconde position ;
- l'élément d'affichage est d'une forme sensiblement parallélépipédique, une face d'affichage de l'élément est de dimensions correspondant sensiblement à celles de l'ouverture du logement, et une partie inférieure de l'élément d'affichage est montée à rotation autour d'un axe sensiblement transversal sur une paroi inférieure du logement, pour que :
   - dans la première position, une face de dos de l'élément d'affichage, opposée à sa face d'affichage, repose sur la paroi inférieure du logement,
   - dans la seconde position, sa face d'affichage coïncide avec l'ouverture du logement et affleure à la surface de la planche de bord ;
- le couvercle et l'élément d'affichage sont liés en rotation par l'intermédiaire d'un dispositif mécanique de transmission de mouvement ;
- l'agencement comporte des moyens de rappel élastique, du couvercle et/ou de l'élément d'affichage vers la seconde position ;
- le couvercle et l'élément d'affichage sont motorisés électriquement et leurs mouvements sont synchronisés ;
- l'élément d'affichage comporte un écran sur sa face d'affichage ;
- l'élément d'affichage comporte un clavier qui est agencé en dessous de l'écran et qui fait saillie à partir de sa face d'affichage ;
- l'écran est associé à un système de navigation par satellite du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective d'un agencement selon l'invention ;
- la figure 2 est une vue en coupe de l'agencement de la figure 1 représenté dans la première position ; et
- la figure 3 est une vue en coupe de l'agencement de la figure 1 représenté dans la seconde position.

Dans la description qui va suivre, des chiffres de référence identiques désignent des pièces identiques ou ayant des fonctions similaires.

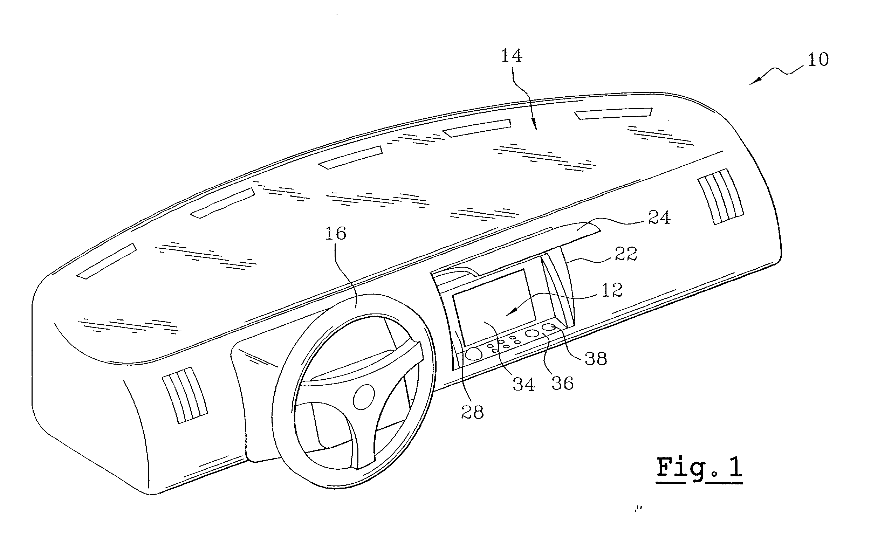

On a représenté à la figure 1 un agencement 10 pour un élément d'affichage d'informations destiné à un véhicule automobile.

De manière connue, l'agencement 10 comporte un élément d'affichage 12 qui, comme on le verra ultérieurement dans la suite de la présente description, est monté mobile dans une planche de bord 14 d'orientation sensiblement transversale.

L'élément d'affichage 12 est par exemple monté à proximité d'un volant 16 du véhicule de manière à pouvoir être facilement consulté par un conducteur du véhicule.

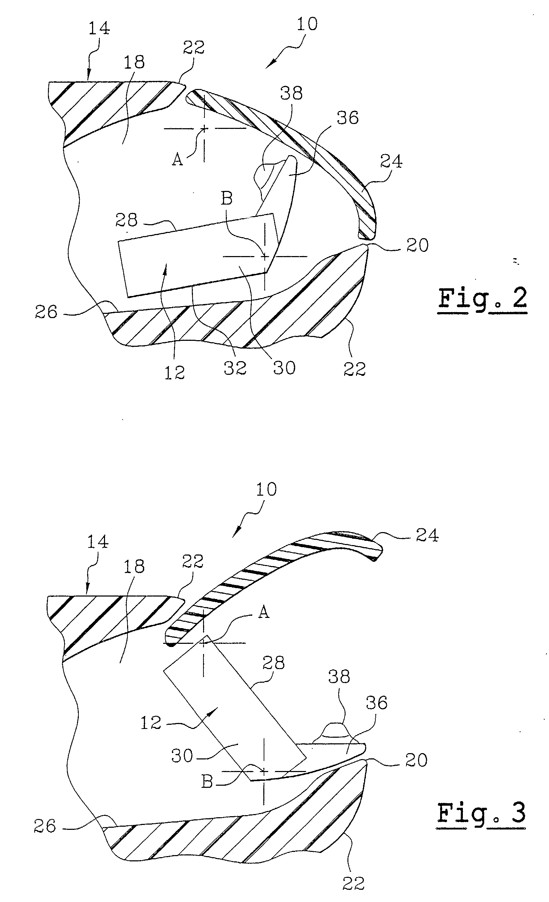

De manière connue, l'élément d'affichage 12 est monté mobile entre une première position, représentée à la figure 2, dans laquelle il est escamoté dans un logement 18 de la planche de bord 14 dont une ouverture 20 débouche dans une surface 22 de la planche de bord 14, et une seconde position, représentée à la figure 3, dans laquelle il fait face à ladite ouverture 20. Dans cette configuration, il affleure sensiblement en alignement de la surface 22 de la planche de bord 14.

Conformément à l'invention, comme l'illustrent les figures 2 et 3, l'agencement 10 comporte un couvercle 24 qui est monté à rotation autour d'un axe "A" sensiblement transversal, au-dessus de l'ouverture 20 du logement 18, et qui est destiné à accompagner le mouvement de l'élément d'affichage 12 pour former une visière pour ledit élément d'affichage 12.

On remarquera qu'avantageusement tout le couvercle 24 et l'élément d'affichage 12 sont mobiles selon une cinématique qui leur est propre, c'est à dire que leur mouvements, sont articulés indépendamment l'un de l'autre bien qu'ils soient de préférence synchronisés comme on le verra ultérieurement.

Plus particulièrement, le couvercle 24 est destiné, dans la première position escamotée de l'élément d'affichage 12 qui a été représentée à la figure 1, à obturer l'ouverture 20 du logement 18 en affleurant dans l'alignement de la surface 22 de la planche de bord 14.

Dans la seconde position de l'élément d'affichage 12 qui a été représentée à la figure 3, le couvercle 24 est destiné à faire saillie suivant une orientation sensiblement horizontale à partir de la surface 22 de la planche de bord 14 pour former une visière pour l'élément d'affichage 12.

Il sera compris que par "sensiblement horizontale" on entend aussi une orientation légèrement inclinée, de l'ordre par exemple de 10 à 20 degrés vers le haut.

Cette configuration est particulièrement avantageuse car elle permet de prévenir l'apparition de reflets à la surface de l'élément d'affichage 12.

Dans le mode de réalisation préféré de l'invention, l'élément d'affichage 12 est monté à rotation dans le logement 18 autour d'un axe "B" sensiblement transversal.

Cette configuration n'est pas limitative de l'invention, et l'élément d'affichage 12 pourrait être monté à rotation autour d'un axe autre que transversal, ou bien encore être monté coulissant dans un logement supplémentaire débouchant dans la paroi inférieure 26 du logement 18.

Dans le mode de réalisation préféré de l'invention, l'élément d'affichage 12 est, comme on peut le voir à la figure 1, d'une forme sensiblement parallélépipédique, et une face d'affichage 28 de l'élément d'affichage 12 est de dimensions correspondant sensiblement à celles de l'ouverture 20 du logement 18. Une partie inférieure 30 de l'élément d'affichage 12 est montée à rotation autour de l'axe "B" sensiblement transversal sur la paroi inférieure 26 du logement 18.

De la sorte, dans la première position qui a été représentée à la figure 2, une face de dos 32 de l'élément d'affichage 12 repose sensiblement sur la paroi inférieure 26 du logement 18, et, dans la seconde position qui a été représentée à la figure 3, la face d'affichage 28 de l'élément d'affichage 12 coïncide sensiblement avec l'ouverture 20 du logement 18 en affleurant à la surface 22 de la planche de bord 14.

Il sera compris que tous les moyens connus peuvent être utilisés pour permettre la rotation du couvercle autour de son axe "A" et pour permettre la rotation de l'élément d'affichage 12 autour de son axe "B".

Dans le mode de réalisation préféré de l'invention, le couvercle 24 et l'élément d'affichage 12 sont liés en rotation par l'intermédiaire d'un dispositif mécanique de transmission de mouvement (non représenté). Ce dispositif consiste par exemple en une cascade de pignons (non représentée) ou en une courroie qui relie deux roues (non représentées) solidaires des axes A et B respectifs de rotation du couvercle 24 et de l'élément d'affichage 12.

Avantageusement, dans cette configuration, l'agencement 10 comporte des moyens de rappel élastique (non représentés) du couvercle 24 et/ou de l'élément d'affichage 12 vers la seconde position.

Par exemple, le couvercle 24 et l'élément d'affichage 12 étant liés en rotation, l'invention peut prévoir des moyens de rappel élastique du couvercle qui permettent, dès lors que le couvercle 24 quitte la première position dans laquelle il affleure avec la surface 22 de la planche de bord 14, de rappeler le couvercle 24 vers sa seconde position dans laquelle il fait saillie hors de la surface 22 de la planche de bord 14 pour former la visière de l'élément d'affichage 12.

Il sera compris que, dans cette configuration, on peut prévoir des moyens (non représentés) de verrouillage du couvercle 24 dans sa première position, lesquels moyens de verrouillage peuvent par exemple, de manière conventionnelle, être déverrouillés par une simple pression sur le couvercle 24 pour provoquer la remontée du couvercle 24.

Il sera aussi compris que dans cette configuration, le couvercle 24 peut comporter des moyens de butée destinés à l'immobiliser dans la seconde position dans laquelle il forme visière pour l'élément d'affichage 12.

En variante, le couvercle 24 et l'élément d'affichage 12 peuvent être motorisés électriquement et leurs mouvements peuvent alors être synchronisés. Par exemple, la commande de rotation simultanée du couvercle 24 et de l'élément d'affichage 12 peut être provoquée par une pression sur un interrupteur (non représenté) agencé à proximité du volant 16 du véhicule, ou bien par une pression sur le couvercle 24 dont l'enfoncement déclenche un capteur (non représenté) qui commande l'ouverture simultanée du couvercle 24 et de l'élément d'affichage 12.

Dans le mode de réalisation préféré de l'invention, comme l'illustre la figure 1, l'élément d'affichage 12 comporte un écran 34 qui est agencé sur sa face d'affichage 28.

De manière non limitative de l'invention, l'écran 34 est associé à un système de navigation par satellite du véhicule et il est susceptible de fournir au conducteur des informations relatives à sa localisation et au trafic existant sur l'itinéraire qu'il doit parcourir.

Enfin, dans cette configuration, l'élément d'affichage 12 comporte un clavier 36 qui est agencé en dessous de l'écran 34 et qui fait saillie hors de sa face d'affichage 28.

Ce clavier permet de commander les fonctions du système de navigation qui est associé à l'écran 34 et il est avantageusement solidaire de l'élément d'affichage 12.

De la sorte, il est lui aussi escamoté dans la première position de l'élément d'affichage, et il est lui aussi apparent dans la seconde position, selon une position horizontale facilitant la frappe de boutons de commande 38 par le conducteur du véhicule.

L'invention propose donc un agencement pour un élément d'affichage 12 qui présente à la fois l'avantage de protéger ledit élément d'affichage des poussières lorsqu'il est dans sa première position, puisque le couvercle 24 obture l'ouverture 22 du logement 18, et de protéger l'élément d'affichage 12 des reflets lorsqu'il occupe sa seconde position dans laquelle il affleure à la surface 22 de la planche de bord 14.

## Revendications

1. Agencement (10) pour un élément (12) d'affichage d'informations destiné à un véhicule automobile, du type dans lequel l'élément (12) d'affichage est monté mobile dans une planche (14) de bord du véhicule d'orientation sensiblement transversale, entre une première position dans laquelle il est escamoté dans un logement (18) de la planche (14) de bord dont une ouverture (20) débouche à la surface (22) de la planche de bord et une seconde position dans laquelle il fait face à ladite ouverture (20),
**caractérisé en ce qu'**il comporte un couvercle (24) qui est monté à rotation autour d'un axe (A) transversal au-dessus de l'ouverture (20) du logement (18) et qui est destiné à accompagner le mouvement de l'élément (12) d'affichage pour :
- dans la première position de l'élément (12) d'affichage, obturer l'ouverture (20) du logement (18) en affleurant à la surface (22) de la planche (14) de bord,
- dans la seconde position, faire saillie sensiblement horizontalement à partir de la surface (22) de la planche (14) de bord pour former une visière pour l'élément (12) d'affichage.

2. Agencement selon la revendication précédente, **caractérisé en ce que** l'élément (12) d'affichage est mobile selon une cinématique qui lui est propre de manière à affleure sensiblement à la surface (22) de la planche de bord (14) dans la seconde position.

3. Agencement (10) selon l'une des revendications précédentes, **caractérisé en ce que** l'élément (12) d'affichage est monté à rotation dans le logement (18).

4. Agencement (10) selon la revendication précédente, **caractérisé en ce que** l'élément (12) d'affichage est d'une forme sensiblement parallélépipédique, **en ce qu'**une face (28) d'affichage de l'élément (12) est de dimensions correspondant sensiblement à celles de l'ouverture (20) du logement (18), et **en ce qu'**une partie inférieure (30) de l'élément (12) d'affichage est montée à rotation autour d'un axe (B) sensiblement transversal sur une paroi inférieure (26) du logement (18), pour que :
- dans la première position, une face (32) de dos de l'élément (12) d'affichage, opposée à sa face (28) d'affichage, repose sur la paroi inférieure (26) du logement (12),
- dans la seconde position, sa face (28) d'affichage coïncide avec l'ouverture (20) du logement et affleure à la surface (22) de la planche (14) de bord.

5. Agencement (10) selon l'une quelconque des revendications précédentes, **caractérisé en ce que** le couvercle (24) et l'élément (12) d'affichage sont liés en rotation par l'intermédiaire d'un dispositif mécanique de transmission de mouvement.

6. Agencement (10) selon la revendication précédente, **caractérisé en ce qu'**il comporte des moyens de rappel élastique, du couvercle (24) et/ou de l'élément (12) d'affichage vers la seconde position.

7. Agencement (10) selon l'une quelconque des revendications 1 à 4, **caractérisé en ce que** le couvercle (24) et l'élément (12) d'affichage sont motorisés électriquement et **en ce que** leur mouvements sont synchronisés.

8. Agencement (10) selon l'une quelconque des revendications précédentes, **caractérisé en ce que** l'élément (12) d'affichage comporte un écran (34) sur sa face (28) d'affichage.

9. Agencement (10) selon la revendication précédente, **caractérisé en ce que** l'élément (12) d'affichage comporte un clavier (36) qui est agencé en dessous de l'écran (34) et qui fait saillie à partir de sa face (28) d'affichage.

10. Agencement (10) selon l'une des revendications 8 ou 9, **caractérisé en ce que** l'écran (34) est associé à un système de navigation par satellite du véhicule.
